# EUROPEAN PATENT SPECIFICATION

(11) **EP 1 862 383 B1**
(45) Date of publication and mention of the grant of the patent: **15.12.2010**
(21) Application number: 07107722.6
(22) Date of filing: 08.05.2007
(51) Int. Cl.: B62J 35/00

(54) **Fuel pipe structure**
Kraftstoffleitungsstruktur
Structure de tuyau de carburant

(30) Priority: 31.05.2006 JP 2006152751
(43) Date of publication of application: 05.12.2007
(73) Proprietor: Honda Motor Co., Ltd., Tokyo 107-8556 (JP)
(72) Inventor: Seki, Yoshitaka, Saitama 351-0193 (JP)
(74) Representative: Rupp, Christian

(56) References cited:
- EP-A- 1 609 709
- EP-A- 1 642 813
- EP-A1- 0 536 719
- WO-A-2005/070750
- WO-A-2005/073063
- JP-A- 2 028 075
- JP-A- 9 024 875
- JP-A- 61 139 574

## Description

The present invention relates to a motorcycle comprising a fuel pipe structure for connecting a fuel pump joint pipe to a fuel supply system.

Motorcycles typically have a fuel pump built into a fuel tank. A joint pipe that serves as a delivery port of the fuel pump and an intake port of a fuel supply system are typically connected by a fuel pipe having a bent portion. The fuel tank is designed to be swung vertically about a swing axis extending in a vehicle width direction to ensure good maintainability of the motorcycle. The bent portion of the fuel pipe changes its angle in such a mode as to follow the swing motion.

It is preferable that the aforementioned fuel pipe be disposed at a position, at which the fuel pipe does not impede maintenance service jobs performed, when the fuel tank is swung vertically. Conventionally, the bent portion of the fuel pipe is disposed at a position near a center of the swing axis, so that the fuel pipe does not block a maintenance space (see, for example.
Japanese Patent Laid-open No. 2005-343211

Further fuel pipe structures for motorcycles are disclosed also in WO 2005/070750 A and EP 0 536 719 A1.

Disadvantageously, however, if the bent portion of the fuel pipe is disposed at a position near the swing axis and the angle of the bent portion is varied to follow the swing motion, angular displacement of the bent portion of the fuel pipe becomes great in proportion to a swing angle as the fuel tank is swung to a large angle. This results in load being applied only to the bent portion.

The present invention has been made to solve the foregoing problem of the conventional art and it is an object of the present invention to provide a fuel pipe structure capable of keeping even smaller the angular displacement when the fuel pipe is bent, while ensuring the maintenance space formed by the swing motion of the fuel tank.

The present invention provides a motorcycle comprising a fuel pipe structure connecting a joint pipe of a fuel pump to a fuel supply system with a fuel pipe. The fuel pump is disposed inside a fuel tank swingably supported on a vehicle body frame. The fuel pipe is extended from the joint pipe in a direction, in which a swing axis of the fuel tank is extended, and bent at a bent portion to change a direction thereof before being extended to reach the fuel supply system.

According to the present invention, the fuel pipe includes a first horizontal portion, a second horizontal portion, and a bent portion. The first horizontal portion is connected to the fuel supply system. The second horizontal portion is connected to the joint pipe and extended in the direction in which the swing axis is extended. The bent portion, of substantially a U-shape, connects the first and the second horizontal portions.
The second horizontal portion is displaced upwardly relative to the first horizontal portion when the fuel tank is swingably moved to be opened.
According to the present invention, the bent portion of the fuel pipe may be opened to a small angle relative to a swing angle of the fuel tank. This allows the fuel pipe to follow a swing movement of the fuel tank.

Preferably, an air cleaner is disposed forward of the fuel tank and the swing axis is disposed rearward of the fuel tank.
According to the above-described arrangement, an air cleaner capacity can be secured while good space efficiency is ensured. Further, piping of the fuel pipe is made easy and easy maintainability of the air cleaner is ensured.

In accordance with the present invention, the fuel pipe is extended in the direction, in which the swing axis of the fuel tank is extended. This prevents piping of the fuel pipe from blocking the maintenance space. Further, according to the aspects of the present invention, the fuel pump is disposed at a position, at which the fuel pipe can kink when the fuel tank is swingably moved. This makes it possible to absorb displacement of the fuel tank by the swing movement with the kink of the fuel pipe. This allows the fuel pipe to follow the swing movement of the fuel pump mounted in the fuel tank without having to make an angular displacement of the bent portion of the fuel pipe large more than necessary. Further, piping the fuel pipe through bending allows the fuel pump to be disposed freely at any desired location.
Fig. 1 is a side elevational view showing a motorcycle having a fuel pipe structure according to an embodiment of the present invention.
Fig. 2 is an enlarged view showing a portion of a fuel tank shown in Fig. 1.
Fig. 3 is a view showing a condition of the fuel tank shown in Fig. 2 swingably moved.
Fig. 4 is a side elevational view showing a condition, in which a fuel pipe is connected to a fuel pump using the fuel pipe structure according to the embodiment of the present invention.
Fig. 5 is a view of Fig. 4 as seen from a lower side.
Figs. 6(a) and 6(b) are general views showing the fuel supply tube in a single part state not assembled in place.
Fig. 7 is a view showing routing of the fuel pipe as viewed from a lower side of a fuel tank.
Fig. 8(a) is a view on arrow A of Fig. 7; Fig. 8(b) is a view showing a condition of the fuel pipe, in which the fuel tank is swung about a swing axis from the condition shown in Fig. 8(a); and, Fig. 8(c) is a view showing a condition of the fuel pipe, in which the fuel tank is swung further in the upward direction X from the condition shown in Fig. 8(b).
Fig. 9 is a view on arrow B of Fig. 8(a), the solid line showing the condition of Fig. 8(a) and the dash-double-dot line showing the conditions of Figs. 8(b) and 8(c).

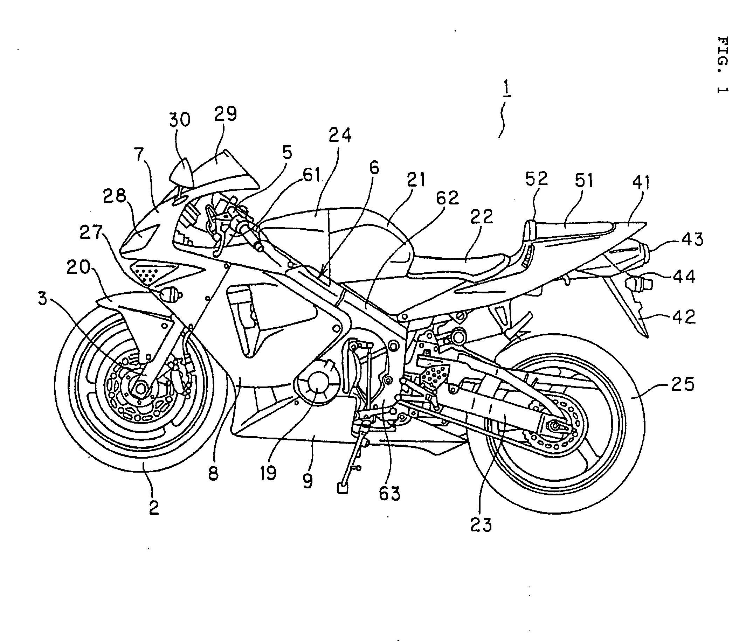

A motorcycle comprising a fuel pipe structure according to a specific embodiment to which the present invention is applied will be described below with reference to the accompanying drawings. Fig. 1 is a schematic view showing a motorcycle having the fuel pipe structure according to the embodiment of the present invention. Throughout the descriptions given hereunder, a vertical direction and a fore-aft direction indicate a direction with reference to Fig. 1. A lateral direction is a direction as seen from a rider of the motorcycle.

Referring to Fig. 1, a motorcycle 1 includes a vehicle body frame 6. The vehicle body frame 6 includes a head pipe 61, a pair of left and right main frames 62, a pair of left and right pivot plates 63, and a cross member not shown. The main frames 62 extend obliquely downwardly and rearwardly from the head pipe 61. The pivot plates 63 are connected rearwardly the main frames 62. The cross member connects these pivot plates 63 mutually horizontally.

Referring to Fig. 1, a front fork 3 is swingably connected to the head pipe 61 of the vehicle body frame 6. The front fork 3 includes a lower end portion, to which a front wheel 2 including a hydraulic disc brake is rotatably supported. A front fender 20 is disposed upward of the front wheel 2. The front fender 20 is mounted in such a mode as to be supported by the front fork 3. The front fork 3 further includes an upper end portion, to which a steering handlebar 5 is fitted.

A water-cooled, inline 4-cylinder, transverse engine 19 is mounted on a lower side at a central portion of the vehicle body frame 6. A middle cowl 8 is disposed on each of both sides of the engine 19. The middle cowl 8 is removably mounted relative to a vehicle body in such a mode as to be continuous with an upper cowl 7. A two-lamp headlight 28, a windscreen 29, a pair of left and right front turn signal lamps 27, and a pair of left and right rearview mirrors 30 are mounted in the upper cowl 7.

A lower cowl 9 is disposed downward of the engine 19. The lower cowl 9 is removably mounted relative to the vehicle body in such a mode as to be continuous with the middle cowl 8. A fuel tank 21 is disposed upward of the engine 19 and on an upper side of the vehicle body frame 6. A front seat 22 is disposed rearward of the fuel tank 21. A half cover 24 is attached on a front side of the fuel tank 21. The half cover 24 covers an upper portion of a space on a front side of the fuel tank 21. A rear seat (pillion seat) 51 is mounted rearward of the front seat 22. A rear cowl 41 and a rear fender 42 are attached on a lower side of the rear seat 51. A stop lamp 43 and a pair of left and right rear turn signal lamps 44 are mounted in the rear fender 42.

Referring further to Fig. 1, a swing arm (rear fork) 23 is swingably supported at a lower portion rearward of the vehicle body frame 6. A chain-driven rear wheel 25 having a hydraulic brake is supported rotatably at a position downward of the rear fender 42 at a rear end portion of the swing arm 23.

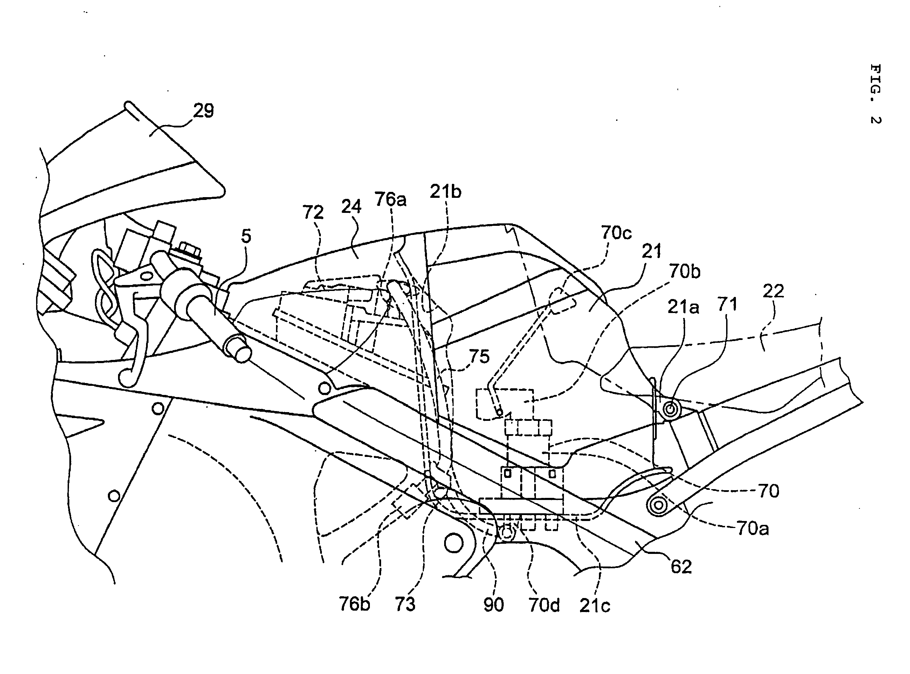

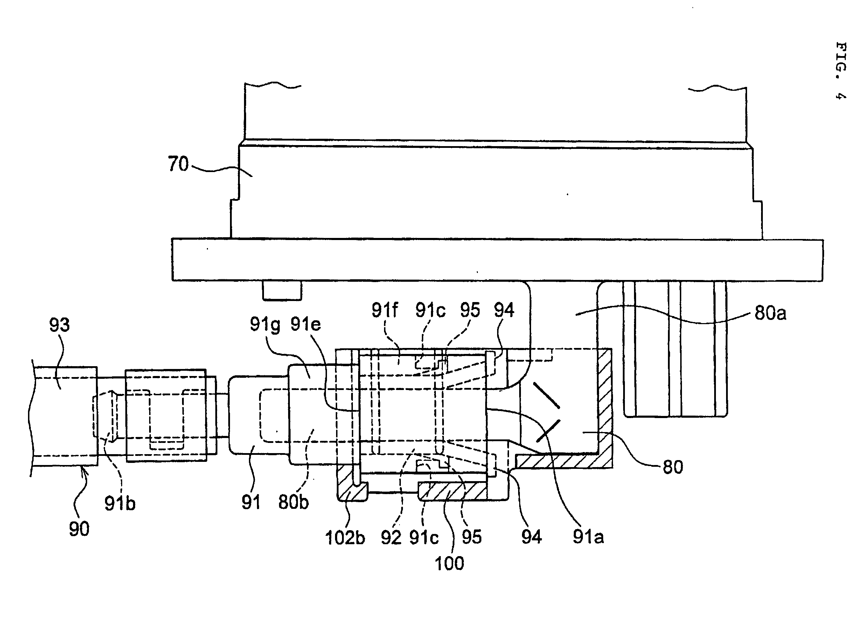

Fig. 2 is an enlarged view showing a mounting portion of the fuel tank 21 shown in Fig. 1.
A fuel pump 70 for delivering fuel in the fuel tank 21 is attached to a bottom surface of the fuel tank 21 with a bolt or other fastening member not shown. More specifically, the fuel pump 70 is disposed on a rear side bottom portion 21c disposed downward of a front side bottom portion 21b of the fuel tank 21. The fuel pump 70 includes a pump 70a, a filter 70b, a float switch 70c, and the like. The pump 70a delivers fuel to an outside of the fuel tank 21. The filter 70b filters fuel. The float switch 70c detects an amount of fuel still available for use left in the fuel tank 21. The pump 70a, the filter 70b, the float switch 70c, and the like are disposed inside the fuel tank 21. The fuel pump 70 further includes a delivery portion 70d disposed on an outside at a lower side of the fuel tank 21. The delivery portion 70d serves the purpose of discharging fuel delivered by the pump 70a. The delivery portion 70d includes a joint pipe 80 (see Fig. 4) to be described in detail later.

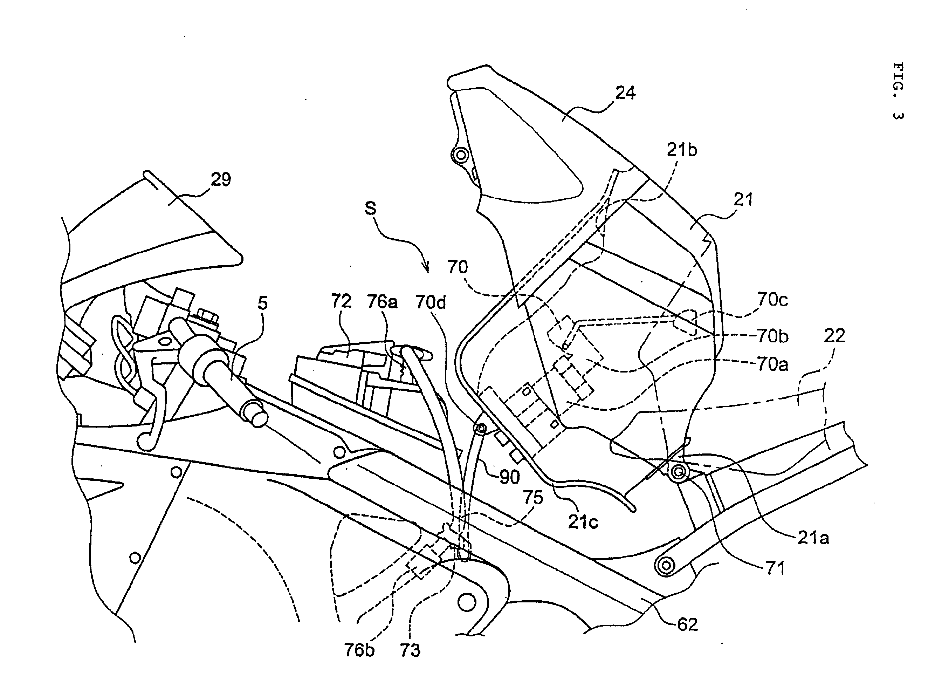

A first end side of a fuel pipe 90 is connected to the delivery portion 70d of the fuel pump 70. A second end side of the fuel pipe 90 is connected to a fuel pipe 73 connected to a throttle body side as a fuel supply system. The fuel pipe 73 is connected through a pipe 75 to a first injector 76a and a second injector 76b. Through the abovementioned arrangement, fuel sent from the fuel tank 21 is mixed with air purified by an air cleaner 72 (see Fig. 3) by the first injector 76a and a resultant mixture is sent to the engine 19.

Fig. 3 is a view showing a condition of the fuel tank 21 shown in Fig. 2 swung about a swing axis 71.
A pair of hinge plates 21a is disposed at a rear end portion of the fuel tank 21. The pair of hinge plates 21a protrudes rearwardly the vehicle body, each of the hinge plates being apart from each other in a vehicle width direction (in a depth direction relative to a paper surface of Fig. 3). The swing axis 71 that extends in the vehicle width direction is disposed on a seat rail side of the vehicle body. The pair of hinge plates 21a of the fuel tank 21 is swingably mounted about the swing axis 71. A front portion of the fuel tank 21 is adapted to be raised upward. In addition, as shown in Fig. 3, raising the front portion of the fuel tank 21 allows the half cover 24 fitted to the fuel tank 21 and the fuel pump 70 incorporated in a bottom portion of the fuel tank 21 to be swung about the swing axis 71 with the fuel tank 21.

Referring further to Fig. 3, swingably moving the front side of the fuel tank 21 will reveal an upper portion of the air cleaner 72, which is disposed so as to be hidden inside the half cover 24 (immediately below the half cover 24), in such a mode as to face the outside of the vehicle body. This, at the same time, forms a maintenance space S, in which an engineer can reach his or her hands, on a lower side of the half cover 24 and a lower portion of the fuel tank 21.
Further, the swingable movement of the fuel tank 21 causes the fuel pipe 90 to undergo elastic deformation corresponding to the position of the fuel tank 21, following a swingably moved position of the fuel pump 70. More specifically, the fuel pipe 90 is seen slightly bent in a direction of being away in a side view shown in Fig. 3.

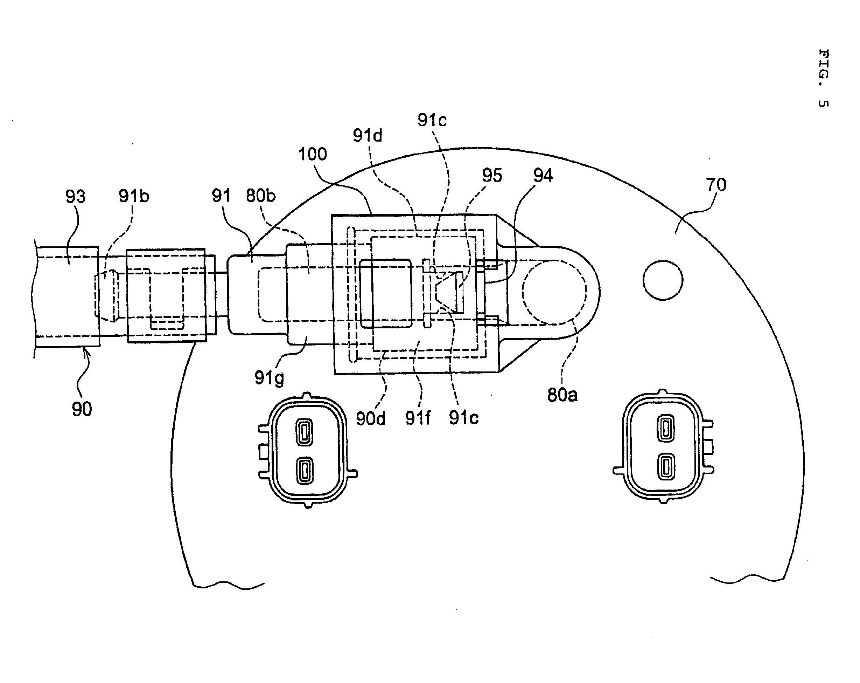

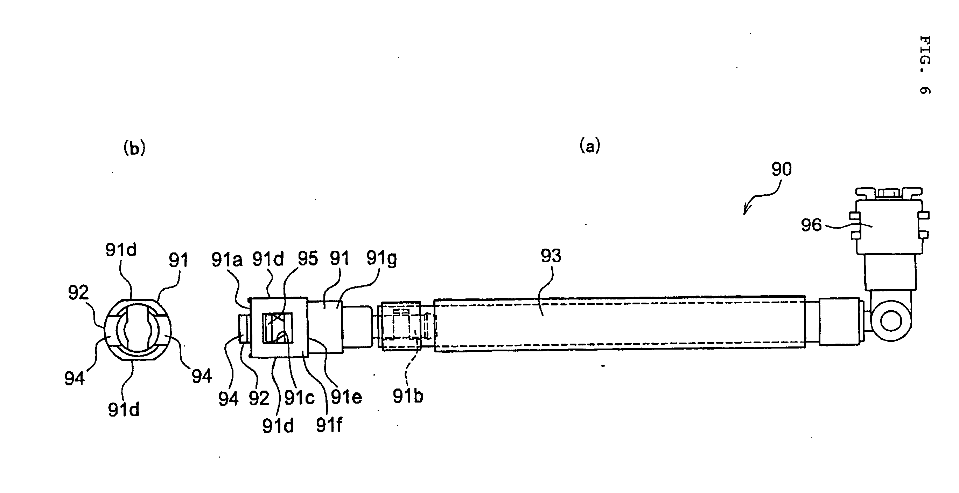

Fig. 4 is a side elevational view showing a condition, in which the fuel pipe 90 is connected to the fuel pump 70 using the fuel pipe structure according to the embodiment of the present invention. Fig. 5 is a view of Fig. 4 as seen from a lower side. Figs. 6(a) and 6(b) are views showing the fuel pipe 90 to be connected to the fuel pump 70 in a single part state not assembled in place.
Referring to Fig. 4, the joint pipe 80 formed into an L-shaped cylinder extends on the lower side of the fuel pump 70. The joint pipe 80 includes an extended portion 80a and a bent portion 80b. The extended portion 80a extends downwardly. The bent portion 80b extends in a lateral direction of the vehicle body (to the left in Fig. 4) from a leading end portion of the extended portion 80a.

Referring to Figs. 4 and 5, the first end portion of the fuel pipe 90 is connected to a leading end portion of the bent portion 80b.
Referring to Figs. 6(a) and 6(b), a quick connector 91 is fitted to the side of the first end portion of the fuel pipe 90. The quick connector 91 includes a hole portion 91a formed on a side thereof to be connected to the bent portion 80b. A connector 92 is removably embedded in the hole portion 91a. An insertion pipe 91b, which is inserted into an inside of an inner pipe of a fuel tube 93, is formed on a side of the quick connector 91 to be connected to the fuel tube 93.

An outer peripheral surface of the quick connector 91 includes an engagement hole 91c, a shoulder portion 91e, and two planes 91d formed thereon.
Referring to Fig. 6(b), a second lock portion 95 of the connector 92 to be described later is adapted to be locked in the engagement hole 91c in a condition in which the connector 92 is fitted in the quick connector 91.
Referring to Fig. 6(a), the shoulder portion 91e includes two cylindrical column portions 91f, 91g of dissimilar diameters. The cylindrical column portions 91f, 91g are formed in such a mode as to be joined in series with each other about respective central axes centered correctly. The cylindrical column portion 91f on the side of the hole portion 91a has a diameter larger than that of the cylindrical column portion 91g on the side of the insertion pipe 91b.
The two planes 91d are formed such that each is disposed on an opposite side from each other across the central axis. The two planes 91d form what is called a width across flats.

The connector 92 serves to allow a leading end of the bent portion 80b of the joint pipe 80 to be connected to the quick connector 91 through a sequence of a single, simple operation. Referring to Fig. 4, the connector 92 includes first lock portions 94, 94 and the second lock portions 95, 95 that protrude in an outward direction. Each of the first lock portions 94, 94 and the second lock portions 95, 95 is formed on an opposite side from each other across the central axis.
The first lock portions 94, 94 are to be engaged with an edge portion of the hole portion 91a in the connector 92 with the connector 92 embedded in the quick connector 91. The second lock portions 95, 95, on the other hand, are to be engaged with an edge portion of the engagement hole 91c. The first lock portions 94, 94 and the second lock portions 95, 95, being engaged in position, prevent the connector 92 from being pulled off from the quick connector 91. In addition, the connector 92 is formed from an elastic material. The first lock portions 94, 94 are made to flex toward an axis of the connector 92 in the longitudinal direction. This disengages engagement of the first lock portions 94, 94 and the second lock portions 95, 95, allowing the connector 92 to be pulled off from the quick connector 91. To fit the quick connector 91 into the inside of the connector 92, the quick connector 91 is pushed into the inside of the connector 92. This makes the first lock portions 94, 94 flex toward the central axis, thus establishing a connection achieved through a sequence of a single, simple operation.

Through the arrangements as described above, fuel delivered from the fuel pump 70 flows through the joint pipe 80 and the quick connector 91 into the fuel tube 93 and discharged from a connector 96 on the side of the second end of the fuel pipe 90.

Referring to Figs. 4 and 5, a protective cover 100 is fitted over a connection between the joint pipe 80, the quick connector 91, and the connector 92 after connections are made. The protective cover 100 is designed to be mounted by being pushed in onto these connections from below the fuel pump 70.

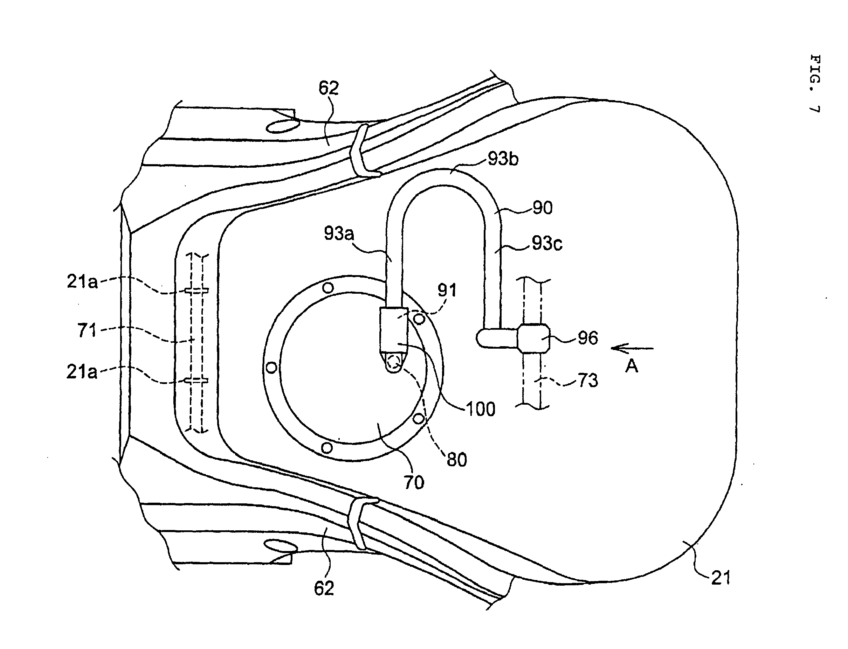

Fig. 7 is a view showing the fuel pipe structure according to the embodiment of the present invention as viewed from a lower side of the fuel tank 21. In Fig. 7, the right-hand side is forward of the vehicle body.
Referring to Fig. 7, the joint pipe 80 and the fuel pipe 73 are disposed downward of the fuel tank 21. The joint pipe 80 is disposed at a center on a bottom portion of the fuel tank 21. The fuel pipe 73 is disposed rearward in the vehicle body relative to the joint pipe 80. The joint pipe 80 and the fuel pipe 73 are connected with the fuel pipe 90.

The fuel pipe 90 includes a first horizontal portion 93a, a bent portion 93b, and a second horizontal portion 93c. The first horizontal portion 93a extends substantially along a direction, in which the swing axis 71 extends, toward the right side of the vehicle body (upward in Fig. 7) from the connection with the joint pipe 80. The bent portion 93b is bent into a U-shape at a position around a right side portion of the fuel tank 21. The second horizontal portion 93c extends substantially in parallel with the first horizontal portion 93a from the bent portion 93b to the connection with the fuel pipe 73. As such, the fuel pipe 90 is formed from the cylindrical fuel tube 93 having elasticity and thus can flex freely into a U-shape.

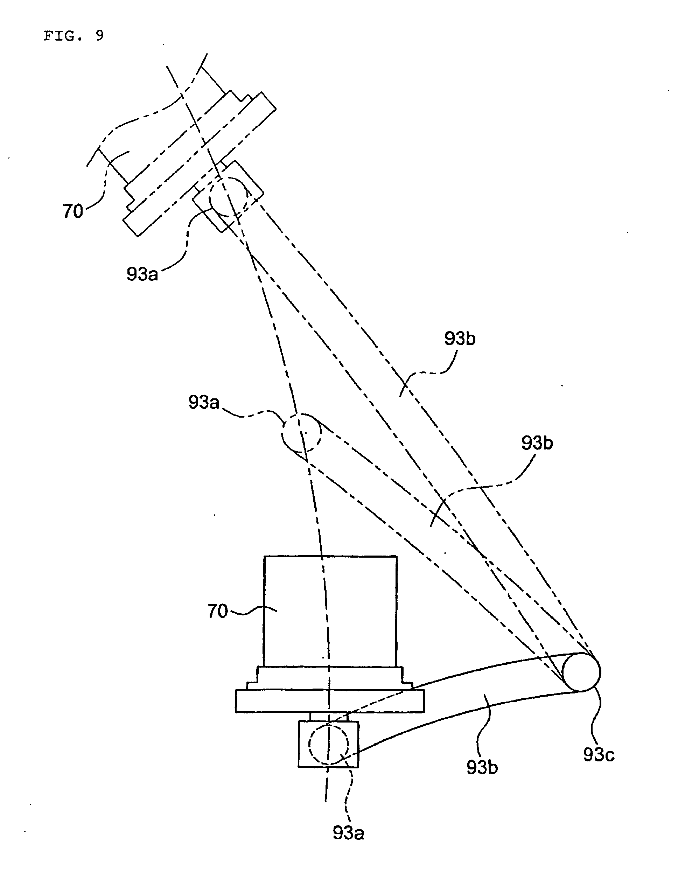

Effects of the fuel pipe structure according to the embodiment of the present invention will be described below.

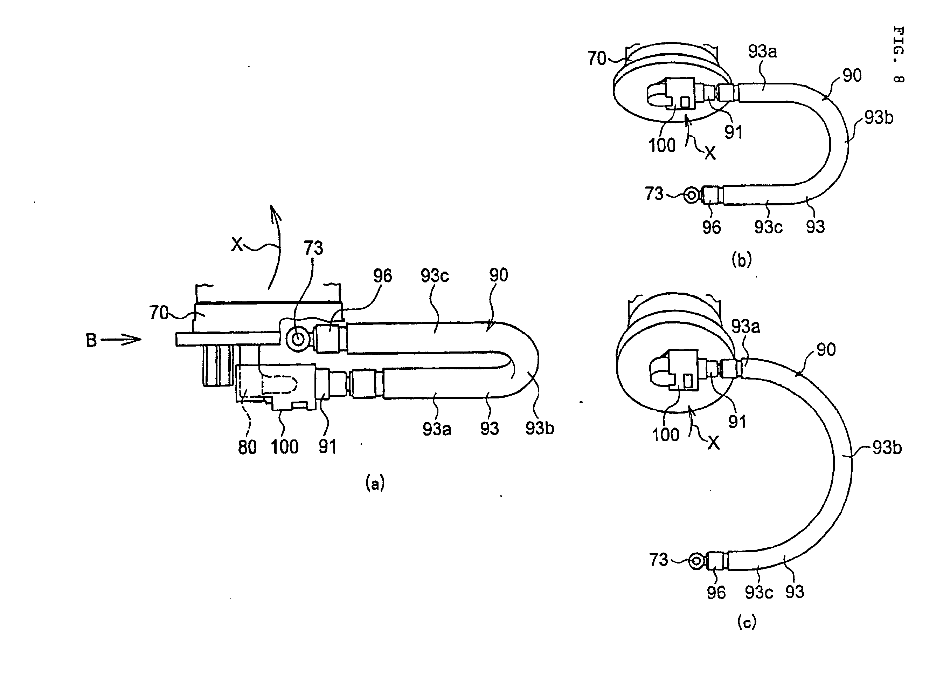

Fig. 8(a) is a view on arrow A of Fig. 7 (as viewed from the front side of the vehicle body). For the sake of explanation, Fig. 8(a) shows only the fuel pipe 90 and the fuel pump 70. Fig. 8(a) is a view showing a condition of the fuel pipe 90, in which the fuel tank 21 (fuel pump 70) is not swung in an upward direction X. Fig. 8(b) is a view showing a condition of the fuel pipe 90, in which the fuel tank 21 (fuel pump 70) is swung in the upward direction X from the condition shown in Fig. 8(a). Fig. 8(c) is a view showing a condition of the fuel pipe 90,
in which the fuel tank 21 (fuel pump 70) is swung further in the upward direction X from the condition shown in Fig. 8(b). Fig. 9 is a view looking Fig. 8(a) from a side, the solid line showing the condition of Fig. 8(a) and the dash-double-dot line showing the conditions of Figs. 8(b) and 8(c).

Referring to Figs. 7 and 8(a), the fuel pipe 90 before the fuel tank 21 is swung in the upward direction X is in a condition, in which the bent portion 93b of the fuel tube 93 is bent in an initial state, so that the fuel tube 93 takes a narrow U-turn shape.
In a condition, in which the fuel tank 21 is swung upward, on the other hand, the fuel tube 93 kinks substantially evenly throughout its entire length as shown in Fig. 8. The fuel tube 93 is formed from a rubber or a small-diameter plastic. When a torsional force is applied about a longitudinal axis of the fuel tube 93, the fuel tube 93 can kink freely within an elastic range. When the torsional force is released, the fuel tube 93 can restore to its original kink-free state. Accordingly, the first horizontal portion 93a can be raised upward without letting a bent state of the bent portion 93b change substantially. Further, referring to Figs. 8(a) to 8(c) and 9, even when the fuel tank 21 is moved upward, the bent portion 93b slightly flexes to open, which makes it easy to raise the fuel tank 21.

Specifically, in the conditions shown in Figs. 8(b) and 8(c), the fuel tube 93 of the fuel pipe 90 absorbs displacement produced from the swing motion of the fuel tank 21 with the kink of the first horizontal portion 93a, the bent portion 93b, and the second horizontal portion 93c, and a slight angular change in the bent portion 93b. If the absorption of the displacement is accomplished only with the bend in the bent portion 93b as in the conventional arrangement, it becomes necessary to make large the change in the bend angle of the bent portion 93b. In the arrangement according to the embodiment of the present invention, however, the absorption of the displacement is achieved without having to make large the change in the bend angle of the bent portion 93b.

In accordance with the fuel pipe structure according to the embodiment of the present invention, the fuel pipe 90 is routed toward the right side portion of the fuel tank 21. This prevents the fuel pipe 90 from blocking the maintenance space S formed by swinging the fuel tank 21, thus securing the maintenance space S.

The fuel tube 93 of the fuel pipe 90 includes the first horizontal portion 93a, which extends in the direction of the swing axis 71 of the fuel tank 21, the bent portion 93b, which is bent into a U-shape at a position around the right side portion of the fuel tank 21, and the second horizontal portion 93c, which extends substantially in parallel with the first horizontal portion 93a from the bent portion 93b to the connection with the fuel pipe 73. Even if the fuel tank 21 is swung in the upward direction X about the swing axis 71, therefore, the displacement in the fuel pump 70 can be absorbed with the kink of the first horizontal portion 93a, the bent portion 93b, and the second horizontal portion 93c, and the slight angular change in the bent portion 93b. As a result, as compared with the case, in which the displacement is absorbed only with the bend in the bent portion 93b, there is no need to make a larger change in the bend angle of the bent portion 93b. Accordingly, even if the fuel tank 21 is swung an increased number of times, local load on the fuel tube 93 can be reduced.

In addition, the swing axis 71 extending in the vehicle width direction is disposed rearward of the fuel tank 21 and the air cleaner 72 is disposed forward of the fuel tank 21. This secures an air cleaner capacity, while ensuring good space efficiency. This enhances volumetric efficiency of the air cleaner 72 and provides easy maintainability of the air cleaner 72.
Further, since the air cleaner 72 is disposed forward of the fuel tank 21, the air cleaner 72 can be serviced easily by swingably moving the fuel tank 21.

According to the above-described embodiment of the present invention, the half cover 24 is disposed at a front portion of a tank cover. The tank cover may be extended further rearwardly than in the embodiment of the present invention, so that the tank cover covers an entire body of the fuel tank 21. In addition to the arrangement, in which the tank cover is swung with the fuel tank 21, the tank cover may be fitted to the frame separately from the fuel tank 21. This arrangement not only protects the fuel tank 21, but also efficiently cuts off heat that would otherwise be transmitted from the engine 19 to a rider.

It should be understood that the descriptions given heretofore are only illustrative describing the preferred embodiment of the present invention and the present invention is not to be limited to the aforementioned embodiment or the modes of implementation and can be implemented in various manners without departing from the scope of the invention as in the appended claims.
1: Motorcycle
6: Vehicle body frame
21: Fuel tank
70: Fuel pump
71: Swing axis
72: Air cleaner
73: fuel pipe
80: Joint pipe
90: Fuel pipe
91: Quick connector
92: Connector
93: Fuel tube
93a: First horizontal portion
93b: Bent portion
93c: Second horizontal portion
S: Maintenance space

## Claims

1. A motorcycle comprising a fuel pipe structure connecting a joint pipe (80) of a fuel pump (70) to a fuel supply system with a fuel pipe (90), the fuel pump (70) being disposed inside a fuel tank (21) swingably supported on a body frame (6) of the motorcycle;
wherein the fuel pipe (90) is extended from the joint pipe (80) in a direction, in which a swing axis (71) of the fuel tank (21) is extended, and bent at a bent portion (93b) to change a direction thereof before being extended to reach the fuel supply system, **characterized in that**
the fuel pipe (90) comprises a first horizontal portion (93c), referring to the motorcycle in a vertical position with the wheels on a geodetic surface, connected to the fuel supply system;
a second horizontal portion (93a), referring to the motorcycle in a vertical position with the wheels on a geodetic surface, being substantially in parallel to the first horizontal portion (93c) and being connected to the joint pipe (80) ; and
a bent portion (93b) connecting the first and the second horizontal portions (93a, 93c) in substantially a U-shape; and
wherein the second horizontal portion (93a) is displaced upwardly relative to the first horizontal portion (93c) when the fuel tank (21) is swingably moved to be opened.

2. A motorcycle according to claim 1;
wherein an air cleaner (72), considering the advancing direction of the motorcycle, is disposed forward of the fuel tank (21) and the swing axis (71) is disposed rearward of the fuel tank (21).

## Patentansprüche

1. Motorrad, umfassend eine Kraftstoffpumpenstruktur, welche ein Verbindungsrohr (80) einer Kraftstoffpumpe (70) zu einem Kraftstoffzuführsystem mit einem Kraftstoffrohr (90) verbindet, wobei die Kraftstoffpumpe (70) im Inneren eines Kraftstofftanks (21) angeordnet ist, welcher schwingbar auf einem Karosserierahmen (6) des Motorrads gelagert ist;
wobei das Kraftstoffrohr (90) von dem Verbindungsrohr (80) in einer Richtung verlängert ist, in welcher eine Schwingachse (71) des Kraftstofftanks (21) verlängert ist, und an einem gebogenen Abschnitt (93b) gebogen ist, um eine Richtung davon zu ändern, bevor es verlängert ist, um das Kraftstoffzuführsystem zu erreichen, **dadurch gekennzeichnet, dass**
das Kraftstoffrohr (90) umfasst
einen ersten horizontalen Abschnitt (93c), bezogen auf das Motorrad in einer vertikalen Position mit den Rädern auf einer geodätischen Oberfläche, welcher mit dem Kraftstoffzuführsystem verbunden ist;
einen zweiten horizontalen Abschnitt (93a), bezogen auf das Motorrad in einer vertikalen Position mit den Rädern auf einer geodätischen Oberfläche, welcher im Wesentlichen parallel zu dem ersten horizontalen Abschnitt (93c) ist und mit dem Verbindungsrohr (80) verbunden ist; und
einen gebogenen Abschnitt (93b), welcher die ersten und die zweiten horizontalen Abschnitte (93a, 93c) in einer im Wesentlichen U-Form verbindet; und
wobei der zweite horizontale Abschnitt (93a) nach oben relativ zu dem ersten horizontalen Abschnitt (93c) versetzt ist, wenn der Kraftstofftank (21) schwingend bewegt wird, um geöffnet zu werden.

2. Motorrad gemäß Anspruch 1,
wobei ein Luftreiniger (72) hinsichtlich der Fahrtrichtung des Motorrads vor dem Kraftstofftank (21) angeordnet ist, und wobei die Schwingachse (71) rückwärtig des Kraftstofftanks (21) angeordnet ist.

## Revendications

1. Dispositif d'alimentation en carburant de véhicule incluant un réservoir de carburant en forme de selle (11) comprenant :
une chambre principale (13) et une chambre auxiliaire (14) pour stocker du carburant (12) à fournir à un moteur (15),
le dispositif d'alimentation en carburant de véhicule comprenant :
un réservoir (17 ; 105) exposé dans la chambre principale (13) ;
une pompe principale (21) prévu au sein du réservoir, pour aspirer le carburant (12) du réservoir en entrant dans une période d'un moment de vitesse normale du moteur (15) à un moment de vitesse élevée de moteur ;
une sous-pompe (22) prévue de façon amovible au sein du réservoir, pour aspirer le carburant dans le réservoir en entrant dans le moment de vitesse élevée de moteur ;
une crépine (23) prévue à l'intérieur du réservoir de carburant et communiquant avec la pompe principale via un tuyau de pompage principal (54), avec la sous-pompe via un tuyau de pompage auxiliaire (55) et avec le moteur via un tuyau d'alimentation (56) ;
un régulateur de pression (73 ; 116) communiquant avec la crépine, pour ajuster une pression interne de la crépine à une valeur de consigne et renvoyer le carburant en excès au réservoir dans le carburant qui est aspiré par les pompes ; et
des moyens de transfert pour transférer le carburant de la chambre auxiliaire dans le réservoir à l'intérieur de la chambre principale,
dans lequel lesdits moyens de transfert comprennent
des moyens de jet de transfert (102) pour utiliser une pression négative générée par l'utilisation du carburant en excès à partir du régulateur de pression (116) et transférer le carburant de la chambre auxiliaire au réservoir (105) ; et
des moyens de jet de retour (103) pour, au moment de la vitesse élevée de moteur, générer une pression négative à l'aide d'une partie du carburant aspiré par la sous-pompe et utiliser la pression négative générée pour diriger le carburant dans la chambre principale vers le réservoir (105).

2. Dispositif d'alimentation en carburant selon la revendication 1, dans lequel les moyens de transfert comprennent :
des moyens de jet de transfert (25) pour, dans une région allant de la vitesse normale à la vitesse élevée du moteur, utiliser une pression négative générée par l'utilisation de carburant en excès dans le carburant aspiré par la pompe principale (21) et transférer le carburant de la chambre auxiliaire au réservoir ; et
des moyens de jet de retour (26) pour, dans la région allant de la vitesse normale à la vitesse élevée du moteur, générer une pression négative par une partie du carburant en excès et utiliser la pression négative générée pour diriger le carburant se trouvant dans la chambre principale vers le réservoir (17).
